# EUROPEAN PATENT APPLICATION

(11) **EP 4 725 747 A1**
(43) Date of publication of application: **15.04.2026**
(21) Application number: 25206104.9
(22) Date of filing: 01.10.2025
(51) Int. Cl.: B60L 53/122, B60L 53/22, B60L 53/30, B60L 53/36, B60L 53/38, B60L 53/39, H02J 50/12, H02M 3/00, H02M 3/335, H02M 7/219, B60L 53/62

(54) **METHOD FOR WIRELESS POWER TRANSFER AND WIRELESS CHARGING PAD**

(30) Priority: 09.10.2024 US 202463705322 P; 28.08.2025 US 202519313624
(71) Applicant: Tesla, Inc., Austin, TX 78725 (US)
(72) Inventor: ZHENG, Liran, Austin, TX, 78725 (US); LIN, Rick, Austin, TX, 78725 (US); PAN, Fei, Austin, TX, 78725 (US)
(74) Representative: Zacco Sweden AB

(57) **Abstract**

A wireless charging pad can include an H bridge circuit, a resonant tank electrically connected to the H bridge circuit, and a switch control circuit. The resonant tank can include a coil arranged for wireless power transfer. The switch control circuit can control the H bridge circuit using both a first modulation and a second modulation. The first modulation includes two non-zero switch configurations and two different zero switch configurations. The second modulation includes the two non-zero switch configurations and the two different zero switch configurations in a different sequence than the first modulation.

## Description

### CROSS-REFERENCE TO PRIORITY APPLICATION

This application claims priority to U.S. Provisional Patent Application No. 63/705,322, entitled "SWITCH CONTROL SCHEME FOR WIRELESS CHARGING DEVICE," filed on October 9, 2024 and U.S. Patent Application No. 19/313,624, entitled "SWITCH CONTROL SCHEME FOR WIRELESS CHARGING DEVICE," filed on August 28, 2025 the technical disclosure of which are hereby incorporated by reference in their entirety and for all purposes.

### BACKGROUND

### Technical Field

This disclosure relates to systems and methods for wireless charging. More specifically, embodiments of this disclosure relate to wireless charging and methods of controlling wireless charging circuit signals.

### Description of Related Technology

Batteries are components of a wide array of battery-powered devices, equipment, or various transportation platforms, such as electric vehicles, robots, electric bikes, electric motorcycles, drones, and many other types of apparatus. A battery can be paired with a wireless charging device and arranged to receive energy through electromagnetic coupling of a receiver pad with the wireless charging device. Specifically, the wireless charging device can induce electromagnetic fields using one or more internal coils, and one or more corresponding receiver coils connected to the battery can capture these fields within a certain proximity to the charging device. There are a variety of technical challenges associated with wireless charging.

### SUMMARY

The systems, methods and devices of this disclosure each have several innovative embodiments, no single one of which is solely responsible for all of the desirable attributes disclosed herein. Details of one or more implementations of the subject matter described in this specification are set forth in the accompanying drawings and the description below.

In some aspects, the techniques described herein relate to a method of wireless power transfer, the method including: controlling an H bridge circuit of a ground pad with a first modulation that configures the H bridge, the first modulation including two non-zero switch configurations and two different zero switch configurations, the two non-zero switch configurations including a positive switch configuration and a negative switch configuration; transitioning control of the H bridge circuit from the first modulation to a second modulation, the second modulation including the two non-zero switch configurations and the two different zero switch configurations in a different sequence than the first modulation; and causing wireless power transfer from the ground pad to a vehicle pad of a vehicle using the H bridge circuit.

In some aspects, the techniques described herein relate to a method, wherein the transitioning control of the H bridge circuit from the first modulation to the second modulation occurs in time during one of the two non-zero switch configurations.

In some aspects, the techniques described herein relate to a method, wherein the first modulation controls the H bridge circuit in a sequence where each transition between switching configurations associated with the sequence involves one switch turning on and one switch turning off.

In some aspects, the techniques described herein relate to a method, wherein the first modulation and the second modulation both correspond to providing a same output voltage waveform from the H bridge circuit.

In some aspects, the techniques described herein relate to a method, wherein the first modulation includes operating the H bridge circuit in the two non-zero switch configurations for a longer duration of time than in the two different zero switch configurations.

In some aspects, the techniques described herein relate to a method, wherein the first modulation controls the H bridge circuit in a first sequence where the positive switch configuration follows a first of the two different zero switch configurations, and wherein the second modulation controls the H bridge circuit in a second sequence where the positive switch configuration follows a second of the two different zero switch configurations.

In some aspects, the techniques described herein relate to a method, wherein the first modulation controls the H bridge circuit in a first sequence where a second of the two different zero switch configurations follows the positive switch configuration, and wherein the second modulation controls the H bridge circuit in a second sequence where a first of the two different zero switch configurations follows the positive switch configuration.

In some aspects, the techniques described herein relate to a method, wherein the H bridge circuit is controlled by the first modulation during at least 50% of a wireless charging cycle.

In some aspects, the techniques described herein relate to a method, further including transitioning control of the H bridge circuit from the second modulation to a third modulation, the third modulation including the two non-zero switch configurations and only a first of the two different zero switch configurations.

In some aspects, the techniques described herein relate to a method, further including transitioning control of the H bridge circuit from the second modulation to a fourth modulation, the fourth modulation including the two non-zero switch configurations and only a second of the two different zero switch configurations.

In some aspects, the techniques described herein relate to a method, further including determining, based at least in part on a temperature associated with the H bridge circuit, that the H bridge circuit is to transition from the first modulation to the second modulation, wherein the transitioning control of the H bridge circuit from the first modulation to the second modulation is performed in response to the determining.

In some aspects, the techniques described herein relate to a method, further including determining, based at least in part on the temperature associated with the H bridge circuit, a frequency of the transitioning control of the H bridge circuit from the first modulation to the second modulation.

In some aspects, the techniques described herein relate to a method of wireless power transfer, the method including: controlling a switching circuit of a wireless charging pad with a first modulation that configures the switching circuit, the first modulation including two non-zero switch configurations and two different zero switch configurations, the two non-zero switch configurations including a positive switch configuration and a negative switch configuration; and transitioning control of the switching circuit from the first modulation to a second modulation, the second modulation including the two non-zero switch configurations and the two different zero switch configurations in a different sequence than the first modulation; wherein the switching circuit receives a voltage associated with wirelessly receiving power from another wireless charging pad.

In some aspects, the techniques described herein relate to a method, wherein the transitioning control of the switching circuit from the first modulation to the second modulation occurs in time during one of the two non-zero switch configurations.

In some aspects, the techniques described herein relate to a wireless charging pad including: an H bridge circuit; a resonant tank electrically connected to the H bridge circuit, the resonant tank including a coil arranged for wireless power transfer; and a switch control circuit configured to control the H bridge circuit using both a first modulation and a second modulation, wherein the first modulation includes two non-zero switch configurations and two different zero switch configurations, and wherein the second modulation includes the two non-zero switch configurations and the two different zero switch configurations in a different sequence than the first modulation.

In some aspects, the techniques described herein relate to a wireless charging pad, wherein the wireless charging pad is a ground pad.

In some aspects, the techniques described herein relate to a wireless charging pad, wherein the wireless charging pad is a vehicle pad.

In some aspects, the techniques described herein relate to a wireless charging pad, wherein the wireless charging pad is configured for wireless power transfer associated with charging a battery pack of a vehicle, and wherein the battery pack has an operating voltage in a range from 200 Volts to 800 Volts.

In some aspects, the techniques described herein relate to a wireless charging pad, wherein controlling the H bridge circuit includes transitioning control of the H bridge circuit from the first modulation to the second modulation.

In some aspects, the techniques described herein relate to a wireless charging pad, wherein the transitioning control of the H bridge circuit from the first modulation to the second modulation occurs in time during one of the two non-zero switch configurations.

### BRIEF DESCRIPTION OF THE DRAWINGS

These and other features, aspects, and advantages of the disclosure are described with reference to the drawings of certain embodiments. It is to be understood that the accompanying drawings, which are incorporated in and constitute a part of this specification, are for the purpose of illustrating concepts disclosed herein and make not be to scale.
FIG. 1A illustrates an example wireless charging environment in which embodiments of the present disclosure can be implemented.
FIG. 1B is a block diagram illustrating the example wireless charging environment of FIG. 1A in accordance with some embodiments of the present disclosure.
FIG. 1C illustrates a representation of a ground pad that may function as a wireless charging device in accordance with some embodiments of the present disclosure.
FIGS. 2A-2D illustrate example circuit schematic diagrams of wireless charging systems in accordance with some embodiments of the present disclosure.
FIG. 3 illustrates an example block diagram of a wireless charging pad according to some embodiments of the present disclosure.
FIGS. 4A-4D illustrate example switch configurations of an H bridge circuit of the wireless charging pad of FIG. 3 in accordance with some embodiments of the present disclosure.
FIGS. 5A-5B illustrate switch configuration schemes for controlling H bridge circuit.
FIGS. 6A-6B illustrate examples of switch configuration schemes for controlling H bridge circuit according to some embodiments of the present disclosure.
FIG. 7 illustrates a switch configuration scheme with a non-smooth transition between two modulation schemes.
FIG. 8 illustrates a switch configuration scheme with a smooth transition between two modulation schemes according to embodiments of the present disclosure.
FIG. 9 illustrates an example diagram of a switch control circuit connected with switches according to embodiments of the present disclosure.

### DETAILED DESCRIPTION OF CERTAIN EMBODIMENTS

The following detailed description of certain embodiments presents various descriptions of specific embodiments. However, the innovations described herein can be embodied in a multitude of different ways, for example, as defined and covered by the claims. In this description, reference is made to the drawings where like reference numerals and/or terms can indicate identical or functionally similar elements. It will be understood that elements illustrated in the figures are not necessarily drawn to scale. Moreover, it will be understood that certain embodiments can include more elements than illustrated in a drawing and/or a subset of the elements illustrated in a drawing. Further, some embodiments can incorporate any suitable combination of features from two or more drawings. The headings provided herein are for convenience only and do not necessarily affect the scope or meaning of the claims.

### Introduction

Aspects of the present disclosure relate to systems and methods for wirelessly charging battery packs via a wireless power transfer. More specifically, the present disclosure relates to alternating modulation schemes for controlling electrical circuit components of wireless charging devices designed for charging battery packs. Illustratively, the electrical circuit components of the wireless charging device can include circuitry to generate an alternating current (AC) signal by inverting a direct current (DC) signal into the AC signal. Such circuitry can have a bridge topology, such as an H bridge. In some embodiments, the circuitry can include multiple switches. Controlling the operation of each of these switches can invert the DC signal into the AC signal. For example, a DC signal (e.g., the input signal of the H bridge) can be inverted into positive, negative, or zero voltage by opening or closing each switch of the circuitry. Generally described, the DC signal can be an input power to the wireless charging device and received from an external source, such as a wall outlet, solar cell(s), and the like.

In various embodiments, the wireless charging device can be used to charge a vehicle, such as an electric vehicle with a battery pack. In these embodiments, the wireless charging device can be implemented as a ground pad or a vehicle pad. For example, a ground pad may be positioned under the vehicle pad of an electric vehicle to charge the electric vehicle. A wireless charging DC/DC converter (also referred to as an aggregated DC/DC power converter) can include a DC/AC inverter in the ground pad and an AC/DC rectifier in the vehicle pad. Power can be transmitted wirelessly from the ground pad to the vehicle pad. In some embodiments, the vehicle pad can also transmit wireless power based on receiving DC signal from the battery pack of the vehicle. For example, the vehicle pad can receive a DC signal from the battery pack and convert the DC signal into an AC signal.

Wireless charging devices can be employed to wirelessly charge vehicles under various operating environments or conditions. In electric vehicle wireless charging, low cost, high density, and operation under a wide range of ambient temperatures can be significant. For example, the hotspot temperature among the semiconductor devices, such as device bridges included in the wireless charging device, can be a limiting factor of one or more of the total device die area, thermal management system, or associated cost, weight, and volume.

To address at least a portion of the above technical problems, embodiments of the present disclosure relate to methods of reducing the hotspot temperature of semiconductor devices. More specifically, some embodiments of the present disclosure provide methods of reducing the hotspot temperatures of the semiconductor devices by balancing the temperatures among the semiconductor devices. The methods disclosed herein can balance the power loss of the semiconductor devices, which can be significant in wireless charging operations.

In some embodiments, a switch control circuit can be configured to control the switching mechanisms of switches included in an H bridge circuit of the wireless charging device. Each switch of the H bridge circuit can include a semiconductor device, such as a metal oxide semiconductor field effect transistor (MOSFET). The control switching mechanisms can balance the heat generated from each switch, especially the body diode conduction loss, and the switching loss which can mostly be the turn-off loss under zero-voltage switching. For example, the on time, the turn-off current, and/or loss of the switches can be balanced during the operation of the wireless charging device. Thus, the temperature and power dissipation among the switches can be balanced without generating a hotspot temperature on certain switches, and the maximum temperature associated with the switches can be reduced. Experiments indicate over 10°C temperature reduction on the hotspot using the switching methods disclosed herein.

In various embodiments disclosed herein, the switch control circuit may control a first switch, and a second switch arranged in a first half-bridge of the H bridge circuit to toggle between open and closed states. The switch control circuit may control a third switch, and a fourth switch arranged in a second half-bridge of the H bridge circuit so as not to toggle. For example, the switch control circuit may control the H bridge circuit to operate in a first switch configuration and a second switch configuration. In the first switch configuration, the first switch is closed, the second switch is open, the third switch is closed, and the fourth switch is open. In transitioning from the first configuration to the second switch configuration, the first switch is opened, the second switch is closed, the third switch remains closed, and the fourth switch remains open.

In some embodiments, the switch control circuit can generate modulation waveforms to control the switches in the H bridge. Such modulation waveforms can be generated by balancing the switching operation of the switches in the H bridge. For example, each switch of the H bridge can be turned on or off two times in each cycle of the modulation waveform, such that during a first state of the cycle, the second and fourth switches can be closed (first and third switches are opened); during a second state of the cycle, first and fourth switches can be closed (second and third switches are opened); during a third state of the cycle, first and third switches can be closed (second and fourth switches are opened); and during a fourth state of the cycle, second and third switches can be closed (first and fourth switches are opened). In some examples, balancing or alternating among different schemes (e.g., different states) can occur in various time durations (e.g., longer time scales). Example time scales for balancing or alternating among different schemes can include milliseconds, seconds, minutes, or hours. Thus, each switch operation in this modulation waveform can be balanced, and the hotspot temperature can be reduced by balancing the heat generation and power dissipation among the switches. The above modulation waveform is provided as an example, and the present disclosure discloses various modulation waveforms that can provide balanced heat generation and power dissipation among the switches.

Some embodiments of the present disclosure further provide modulation schemes that can provide a smooth transition between two different modulation waveforms. For example, the switch control circuit can be configured to transition from a first modulation waveform to a second modulation waveform when the output voltage of the H bridge circuit is positive or negative by preventing the transition from occurring when the output voltage of the H bridge is zero. This transition scheme of the modulation waveforms can provide a smooth transition so that the overvoltage or current transient inside a resonant tank of the wireless charging device can be reduced and/or eliminated. For example, a transition occurring at zero output voltage of the H bridge can result in a transient of the output voltage from zero to negative or zero to positive. This change of voltage can result in over voltage or current voltage being applied to the resonant tank from the H bridge circuit.

Although the various aspects will be described in accordance with illustrative embodiments and combinations of features, one skilled in the relevant art will appreciate that the examples and combinations of features are illustrative in nature and should not necessarily be construed as limiting. More specifically, aspects of the present application may be applicable with various types of vehicle charging mechanisms, power sources, interfaces, and the like. Still further, although specific H bridge circuit schematics for charging batteries and/or battery packs under different voltage levels will be described, such illustrative H bridge circuit schematics should not necessarily be construed as limiting. Accordingly, one skilled in the relevant art will appreciate that the aspects of the present application are not necessarily limited to application to any particular type of vehicle, vehicle charging infrastructure, communications or illustrative interactions between vehicles, owners/users and wireless battery charging systems.

### Overview of Wireless Charging

Generally described, inductive charging, commonly referred to as wireless charging, is a type of wireless power transfer. Inductive charging uses electromagnetic induction to generate or otherwise provide electricity to devices without requiring physical electrical connectivity. Specifically, various devices can be placed near a charging station or inductive pad without needing to be precisely aligned or make electrical contact, a physical dock, an electric plug, and the like. Such devices include but are not limited to, vehicles, manufacturing equipment, consumer electronics, medical devices, and the like.

In accordance with aspects of the present application, inductive charging systems are configured to transfer energy through inductive coupling between components. An illustrative charging system includes a transferring component, which may be configured as a charging station or charging pad. A charging pad for wirelessly transferring power to a vehicle can be referred to as a ground pad. An alternating current (e.g., an input current) from a power source passes through an induction coil in the charging station or pad. Based on the input current, the moving electric charge through the induction coil (e.g., a ground pad coil) creates (or elicits) a magnetic field. Illustratively, the strength of the magnetic field may fluctuate, at least in part, on changes or fluctuations in the input electric current's amplitude. The changing magnetic field creates an alternating electric current in an induction coil on a receiving device (e.g., a vehicle pad coil). The induced alternating current in the receiving device can then pass through a rectifier, converting the induced alternating current to a direct current. Finally, the receiving vehicle can include additional charging components and/or systems that utilize the converted direct current to charge battery systems, provide operating power, or a combination thereof.

Greater distances between the ground pad and vehicle pad coils can be achieved when illustrative inductive charging systems use resonant inductive coupling components/techniques. More specifically, in some embodiments, a capacitor can be connected to each induction coil to create two LC circuits with a specific resonance frequency. The frequency of the alternating current matches the resonance frequency. Additionally, the matched frequency can be further chosen depending on a typical distance between the sending device and the receiver device, with peak efficiency considered. Still further, the use of other materials for the receiver coil, such as silver-plated copper or sometimes aluminum to minimize weight and decrease resistance can be utilized for purposes of energy transfer efficiencies.

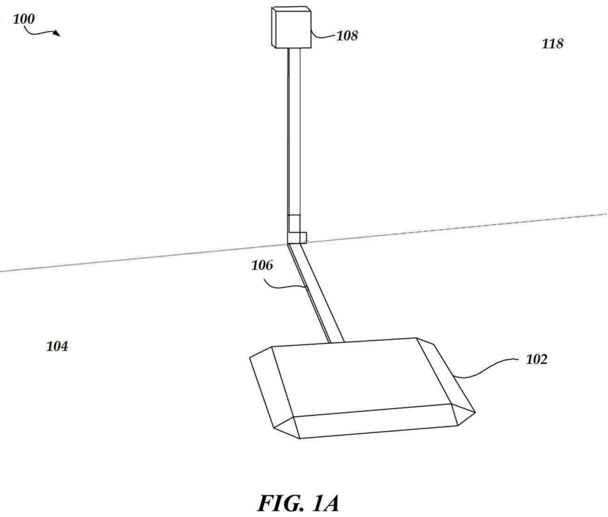

FIG. 1A is a diagram illustrative of an environment 100 for implementing an induction-based wireless charging system in accordance with various aspects of the present application. The environment 100 illustratively can correspond to commercial implementations, such as parking lots, parking stalls, charging booths, and the like. The environment 100 can correspond to private or other non-commercial implementations, such as private residences, etc. By way of an illustrative example, an implementation of an induction-based wireless charging system in a non-commercial implementation can include a ground pad 102 that is configured to generate variable magnetic fields in accordance with an induction charging methodology. As also illustrated in FIG. 1A, the ground pad 102, which can also be referred to as a transmitting component, can correspond to a standalone component that may be operable to be mounted or placed on a floor 104 or another planar surface. In some other embodiments, the ground pad 102 can be integrated or combined with other devices or components.

The ground pad 102 may be connected to one or more power sources, such as an input from a utility company, real-time power sources (e.g., solar cells or wind energy sources), stored energy cells, or a combination thereof. The power sources are configured to provide the input alternating current as described herein. The ground pad 102 may be connected via direct electric connection 106 to the power source, such as via a junction box 108 located on a wall surface 118.

As illustrated in FIG. 1A, in one embodiment, the ground pad 102 corresponds to a form factor that allows for the location on the floor 104 for wirelessly charging with a vehicle having a vehicle pad coil. The ground pad 102 may have a form factor such that the vehicle may be located directly above a top surface of the ground pad 102. Illustratively, the dimensions of the ground pad 102 (e.g., the height and width of the ground pad 102) may be configured so that a distance between the top surface of the ground pad 102 and a bottom surface of the vehicle meets specific criteria, such as minimum distance between the ground pad coil and vehicle pad coil, maximum distance between the ground pad coil and the vehicle pad coil, and the like. In some embodiments, the vehicle pad and/or ground pad 102 (or combination) may be configured with additional components for adjusting (e.g., statically adjusting and/or dynamically adjusting) such distance or otherwise changing the relative orientation between the ground pad 102 and the vehicle.

In some embodiments, the ground pad 102 can be configured to charge a battery pack of a vehicle, wherein the battery pack can have a nominal voltage of over 200 Volts (e.g., a nominal voltage of about 350 Volts or 355 Volts) and a maximum voltage of 400 Volts. In some embodiments, the ground pad 102 can be configured to supply 800 Volts of direct current power. In some embodiments, the ground pad 102 can supply a voltage in a range from about 200 Volts to 800 Volts. The ground pad 102 can wirelessly transfer sufficient power to charge battery packs with such voltages.

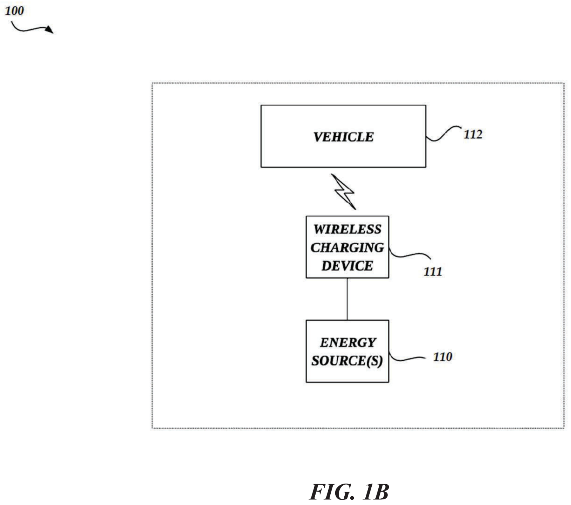

FIG. 1B illustrates a block diagram of the environment 100, including a wireless charging device 111 (e.g., the ground pad 102) in wireless communication with a vehicle 112, such as via induction-based magnetic fields. The wireless charging device 111 is further connected to one or more energy sources 110. Although the wireless charging device 111 is illustrated as having a direct connection to the energy source 110, at least some portion of the input alternating current could be provided via a wireless transmission method. Additionally, in embodiments with multiple power sources, the environment may also include various switching components to cause the selection of energy from individual energy sources 110 or a combination of energy sources 110.

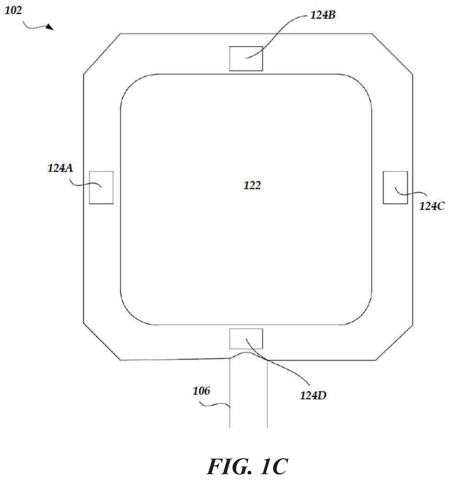

FIG. 1C illustrates a block diagram of a ground pad 102 that may function as a wireless charging device 111 (shown in FIG. 1B). The ground pad 102 can include at least a ground pad coil 122 for causing the generation of magnetic fields from an input current provided from an energy source 110. As illustrated in FIG. 1C, the input current can be provided by a direct electric connection 106.

In some embodiments, the ground pad 102 can also include various sensor components 124A, 124B, 124C, 124D related to the charging process. By way of illustration, the sensor components 124A, 124B, 124C, 124D can be configured for various functions, such as detection of the vehicle 112, detection of objects, measurement of distances to the vehicle, environmental sensors (e.g., temperature sensors, moisture sensors), pressure sensors, and the like. In an embodiment, the sensor components 124A, 124B, 124C, 124D can include radar sensors. The sensor components 124A, 124B, 124C, 124D can include logic and processing components related to the charging process including operational measurements, operational control, safety measurements, communication components and the like.

### Wireless Charging Systems with H Bridge Circuits

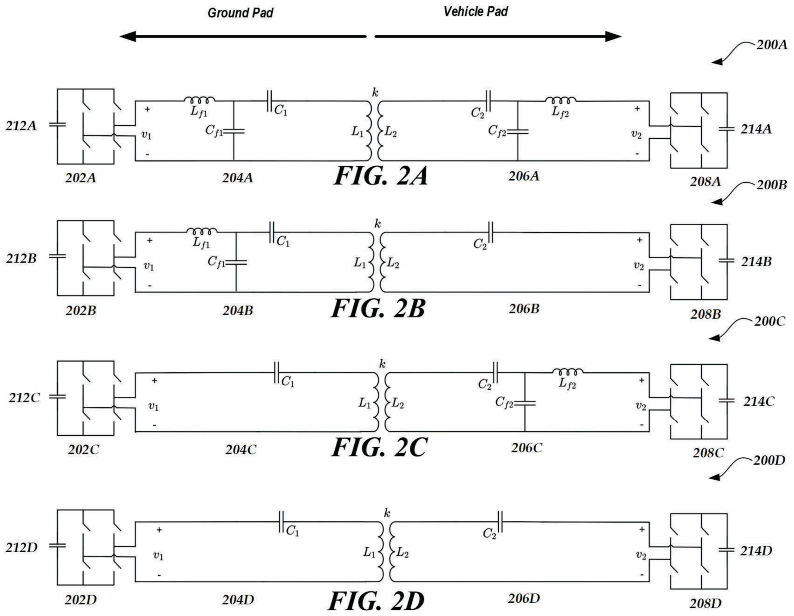

FIGS. 2A-2D illustrate circuit schematic diagrams of example wireless charging systems 200A-200D. As shown in FIGS. 2A-2D, each of the wireless charging systems 200A-200D may include a ground pad (e.g., the ground pad 102) and a vehicle pad that is attached to or otherwise integrated with a vehicle. For example, the ground pad of the wireless charging system 200A may include a capacitor 212A, an H bridge circuit 202A, and a resonant tank 204A as shown in FIG. 2A. A vehicle pad of the wireless charging system 200A may include a capacitor 214A, an H bridge circuit 208A, and a resonant tank 206A, for example, as shown in FIG. 2A. In some embodiments, power may be transferred from a power source (not shown in FIG. 2A) through the H bridge circuit 202A, the resonant tank 204A, the resonant tank 206A, and the H bridge circuit 208A to a battery pack (not shown in FIG. 2A) of a vehicle. This power transfer can include wireless power transfer from a coil L1 of the ground pad to a coil L2 of the vehicle pad. Any of the wireless charging systems 200A-200D can be implemented in accordance with any suitable principles and advantages disclosed herein.

FIG. 2A illustrates a circuit schematic diagram of the wireless charging system 200A. As shown in FIG. 2A, the wireless charging system 200A corresponds to an LCC-LCC circuit architecture. As illustrated, the wireless charging system 200A includes the capacitor 212A, the H bridge circuit 202A, the resonant tank 204A, the resonant tank 206A, the H bridge circuit 208A, and the capacitor 214A. In an LCC-LCC circuit architecture, an inductor L_{f1} and capacitors C_{f1} and C₁ are coupled between the H bridge circuit 202A and the ground pad coil L₁ in the ground pad, and the inductor L_{f2} and capacitors C_{f2} and C₂ are coupled between the H bridge circuit 208A and the vehicle pad coil L₂ in the vehicle pad.

FIG. 2B illustrates a circuit schematic diagram of the wireless charging system 200B. As shown in FIG. 2B, the wireless charging system 200B corresponds to an LCC-Series circuit architecture. As illustrated, the wireless charging system 200B includes the capacitor 212B, the H bridge circuit 202B, the resonant tank 204B, the resonant tank 206B, the H bridge circuit 208B, and the capacitor 214B. In an LCC-series circuit architecture, an inductor L_{f1} and capacitors C_{f1} and C₁ are coupled between the H bridge circuit 202A and the ground pad coil L₁ in the ground pad, and the series capacitor C₂ is coupled between the H bridge circuit 208A and the vehicle pad coil L₂ in the vehicle pad.

FIG. 2C illustrates a circuit schematic diagram of the wireless charging systems 200C. As shown in FIG. 2C, the wireless charging system 200C corresponds to a Series-LCC circuit architecture. As illustrated, the wireless charging system 200C includes the capacitor 212C, the H bridge circuit 202C, the resonant tank 204C, the resonant tank 206C, the H bridge circuit 208C, and the capacitor 214C. In a series-LCC circuit architecture, series capacitor C₁ is coupled between the H bridge circuit 202A and the ground pad coil L₁ in the ground pad, and the inductor L_{f2} and capacitors C_{f2} and C₂ are coupled between the H bridge circuit 208A and the vehicle pad coil L₂ in the vehicle pad.

FIG. 2D illustrates a circuit schematic diagram of the wireless charging systems 200D. As shown in FIG. 2D, the wireless charging system 200D corresponds to a Series-Series circuit architecture. As illustrated, the wireless charging system 200D includes the capacitor 212D, the H bridge circuit 202D, the resonant tank 204D, the resonant tank 206D, the H bridge circuit 208D, and the capacitor 214D. In a series-series circuit architecture, series capacitor C₁ is coupled between the H bridge circuit 202A and the ground pad coil L₁ in the ground pad, and series capacitor C₂ is coupled between the H bridge circuit 208A and the vehicle pad coil L₂ in the vehicle pad.

### Example Wireless Charging Pad

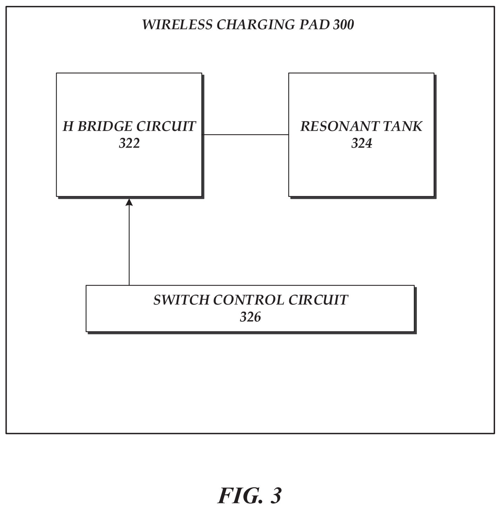

FIG. 3 illustrates an example wireless charging pad 300 in accordance with some embodiments of the present disclosure. The wireless charging pad 300 includes an H bridge circuit 322, a resonant tank 324, and a switch control circuit 326. The wireless charging pad 300 can charge battery packs of vehicles under relatively wide voltage ranges through toggling switches of the H bridge circuit 322. Any suitable principles and advantages of the wireless charging pad 300 can be implemented in an environment in accordance with any suitable principles and advantages of FIGS. 1A to 1C.

The wireless charging pad 300 may be implemented on any ground pads or vehicle pads of the wireless charging systems 200A-200D to extend operable voltage ranges and/or increase wireless charging efficiency. For example, the wireless charging pad 300 may be a ground pad and/or a vehicle pad of any of the wireless charging systems 200A-200D. In some embodiments, the H bridge circuit 322 can correspond to any of the H bridge circuit 202A, H bridge circuit 208A, H bridge circuit 202B, H bridge circuit 208B, H bridge circuit 202C, H bridge circuit 208C, H bridge circuit 202D, and H bridge circuit 208D. The resonant tank 324 can correspond to any of the resonant tank 204A, resonant tank 206A, resonant tank 204B, resonant tank 206B, resonant tank 204C, resonant tank 206C, resonant tank 204D, and resonant tank 206D. The H bridge circuit 322 is an example switching circuit. Any other suitable switching circuit can be used in accordance with any suitable principles and advantages disclosed herein. Such a switching circuit can include half bridge circuits.

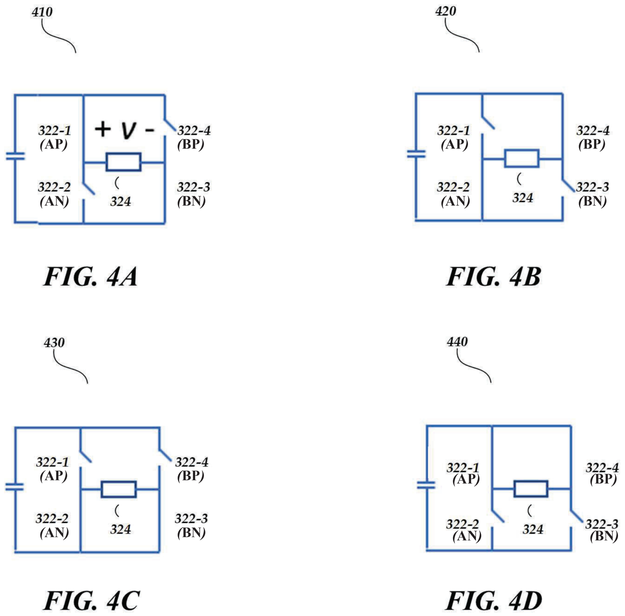

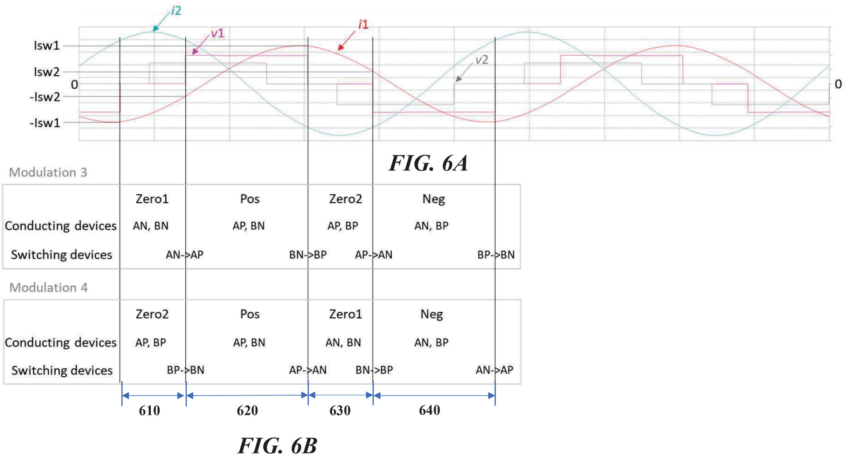

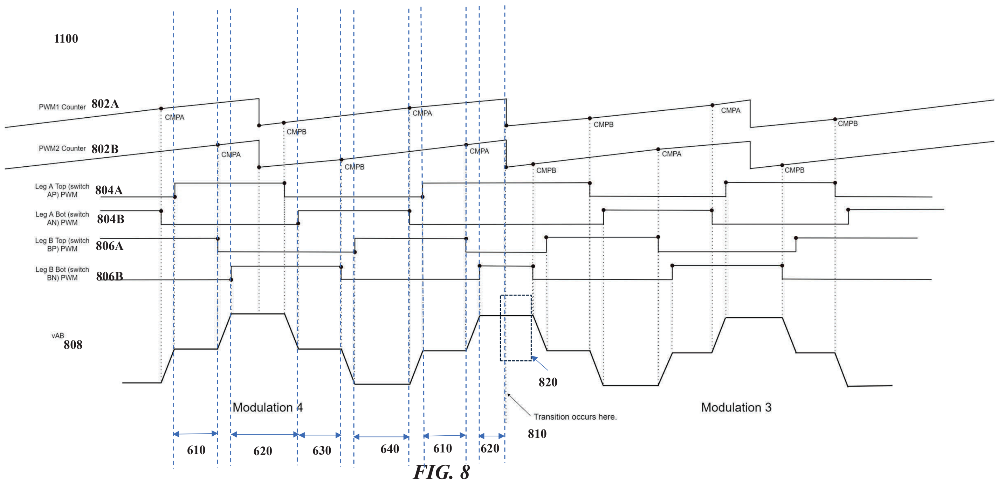

As will be illustrated in FIGS. 4A-4D, the H bridge circuit 322 may include a switch 322-1, a switch 322-2, a switch 322-3, and a switch 322-4. In some embodiments, rather than periodically switching each of the switch 322-1, switch 322-2, switch 322-3, and switch 322-4, the switch control circuit 326 may control some of the switch 322-1, switch 322-2, switch 322-3, and switch 322-4 to be periodically switched between open and closed states and control some of the switch 322-1, switch 322-2, switch 322-3, and switch 322-4 to remain open or closed without toggling. As such, the switch control circuit 326 can configure the switches 322-1 - 322-4 in accordance with modulation schemes as will be illustrated in FIGS. 6A-6C and FIG. 8 to allow the wireless charging pad 300 to charge battery packs under wider voltage ranges.

The switch control circuit 326 can provide control signals to control the states of the switch of the H bridge circuit 322 (e.g., switches 322-1 to 322-4 of FIGS. 4A to 4D). The switch control circuit 326 can be implemented by any suitable circuitry to control the state of the switches of the H bridge circuit 322. When switches of the H bridge circuit 322 have gates (e.g., the switches are FETs or IGBTs), the switch control circuit 326 can provide control signals to gates of the H bridge. In such instances, the switch control circuit 326 can be referred to as a gate drive circuit.

### Example H Bridge Switch Configurations

FIGS. 4A-4D show example switch configurations of the H bridge circuit 322 that may be controlled by the switch control circuit 326 in accordance with some embodiments of the present disclosure. FIG. 4A shows the H bridge circuit 322 may be configured by the switch control circuit 326 to a switch configuration 410, which can be referred to as a positive configuration. FIG. 4B shows the H bridge circuit 322 may be configured by the switch control circuit 326 to a switch configuration 420, which can be referred to as a negative configuration. FIG. 4C shows the H bridge circuit 322 may be configured by the switch control circuit 326 to a switch configuration 430, which can be referred to as a zero 1 configuration. FIG. 4D shows the H bridge circuit 322 may be configured by the switch control circuit 326 to a switch configuration 440, which can be referred to as a zero 2 configuration.

The H bridge circuit 322 includes four switches switch 322-1 (also referred to as "AP" in the present disclosure), switch 322-2 (also referred to as "AN" in the present disclosure), switch 322-3 (also referred to as "BN" in the present disclosure), and 322-4 (also referred to as "BP" in the present disclosure). These switches can be any suitable switches for power electronics, such as n type field effect transistors arranged to switch sufficient voltage for wireless charging disclosed herein. In certain applications, the H bridge circuit 322 can include metal oxide field effect transistors (MOSFETs). Alternatively, or additionally, the H bridge circuit 322 can include insulated-gate bipolar transistors (IGBTs). The H bridge circuit 322 can include a first half bridge and a second half bridge. The first half bridge can include switches 322-1 and 322-2. The second half bridge can include switches 322-3 and 322-4.

As shown in FIG. 4A, in switch configuration 410 (e.g., positive configuration), the switch 322-1 is closed, the switch 322-2 is open, the switch 322-3 is closed, and the switch 322-4 is open. As shown in FIG. 4B, in switch configuration 420 (e.g., negative configuration), the switch 322-1 is open, the switch 322-2 is closed, the switch 322-3 is open,, and the switch 322-4 is closed. As shown in FIG. 4C (e.g., zero 1 configuration), in switch configuration 430, the switch 322-1 is open, the switch 322-2 is closed, the switch 322-3 is closed, and the switch 322-4 is open. As shown in FIG. 4D, in switch configuration 440 (e.g., zero 2 configuration), the switch 322-1 is closed, the switch 322-2 is open, the switch 322-3 is open,, and the switch 322-4 is closed.

### Example H Bridge Switch Configurations

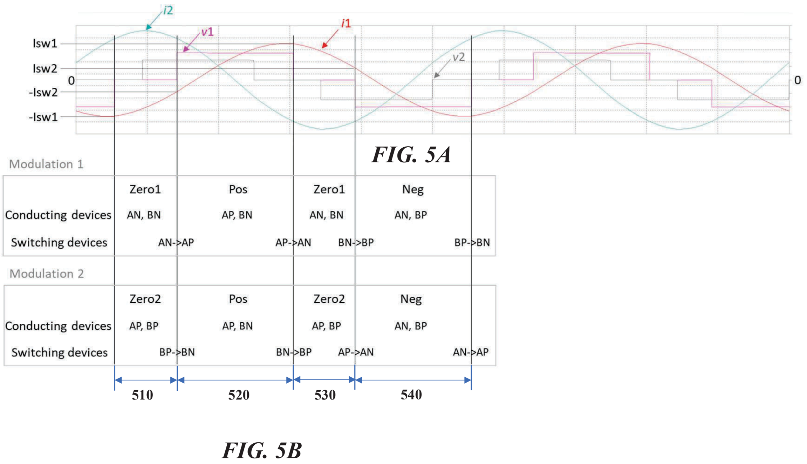

FIGS. 5A-5B show two examples of modulation schemes, modulation scheme 1 and modulation scheme 2. Modulation schemes 1 and 2 can be used as H bridge circuit controlling waveforms. The modulation schemes 1 and 2 can be applied to an H bridge circuit implemented in a ground pad or a vehicle pad. For example, H bridge circuits discussed with reference to Figures 5A-5B can be any suitable H bridge circuit in a wireless charging system (e.g., any of the H bridge circuits 202A-202D or 208A-208D of FIGS. 2A-2D). In addition, switching configurations of the H bridge circuit are described with reference to FIGS. 4A-4D (configurations 410-440).

FIG. 5A shows an example of conceptual operating waveforms applied to the H bridge circuit 202A-202D (shown in FIGS. 2A-2D) or 208A-208D (shown in FIGS. 2A-2D). For the purpose of illustration, the waveform of the output voltage and current of the H bridge circuit implemented in the ground pad are denoted as V1 and I1, respectively. In addition, the waveform of the output voltage and current of the H bridge circuit implemented in the vehicle pad are denoted as V2 and I2, respectively.

FIG. 5B maps the states of an H bridge circuit to modulation scheme 1 and modulation scheme 2. As shown in FIG. 5B, each scheme of modulation scheme 1 and modulation scheme 2 generates a periodic waveform having four different states 510-540. As shown in FIG. 5B, the states 510, 520, 530, and 540, can be referred to as a zero, a positive, a zero, and a negative state, respectively. In some embodiments, the modulation scheme 1 and the modulation scheme 2 can be implemented with various switch configurations corresponding to each state.

In some embodiments, in modulation scheme 1, the state 510 can be generated by configuring the H bridge in the zero 1 switch configuration 430 of FIG. 4C. In the configuration 430, the switches 322-2 (AN) and 322-3 (BN) are turned on, and the switches 322-1 (AP) and 322-4 (BP) are turned off. Then the switch 322-2 (AN) can be turned off, and the switch 322-1 (AP) can be turned on to transition from the state 510, corresponding to the switch configuration 430, to the state 520, corresponding to the switch configuration 410. The state 520 can be referred to as a positive state. In the positive state, the H bridge is in the positive switch configuration 410 of FIG. 4A. In the positive switch configuration 410, the switches 322-1 (AP) and 322-3 (BN) are turned on, and the switches 322-2 (AN) and 322-4 (BP) are turned off.

Then the switch 322-1 (AP) can be turned off, and the switch 322-2 (AN) can be turned on to transition from the state 520 (the positive state having the switch configuration 410) to the state 530 (the zero 1 state having the switch configuration 430 of FIG. 4C).

Then the switch 322-3 (BN) can be turned off, and the switch 322-4 (BP) can be turned on to transition from the state 530 (the zero 1 state having the switch configuration 430) to the state 540. For example, the state 540 can be referred to as a negative state and generated by configuring the H bridge circuit in the negative switch configuration 420 of FIG. 4B. In the negative switch configuration 420, the switches 322-2 (AN) and 322-4 (BP) are turned on, and the switches 322-1 (AP) and 322-3 (BN) are turned off. The modulation scheme 1 can be continuously generated by sequentially repeating the states 510-540.

As further shown in FIG. 5B, the same waveform shown in FIG. 5A can be generated by using the modulation scheme 2, for example, by controlling the switching configurations of the H bridge circuit based on the modulation scheme 2. In modulation scheme 2, the state 510 can be generated by configuring the H bridge in the zero 2 switch configuration 440 of FIG. 4D. In the zero 2 switch configuration 440, the switches 322-1 (AP) and 322-4 (BP) are turned on, and the switches 322-2 (AN) and 322-3 (BN) are turned off.

Then the switch 322-4 (BP) can be turned off, and the switch 322-3 (BN) can be turned on to transition from the state 510, corresponding to the switch configuration 440, to the state 520, the positive state corresponding to the switch configuration 410. In the state 520, the H bridge circuit can be configured in the positive switch configuration 410 of FIG. 4A. In the positive switch configuration 410, the switches 322-1 (AP) and 322-3 (BN) are turned on, and the switches 322-2 (AN) and 322-4 (BP) are turned off.

Then the switch 322-3 (BN) can be turned off, and the switch 322-4 (BP) can be turned on to transition from the state 520 (the positive state having the switch configuration 410) to the state 530 (the zero 2 state having the switch configuration 440 of FIG. 4D).

Then the switch 322-1 (AP) can be turned off, and the switch 322-2 (AN) can be turned on to transition from the state 530 (the zero 2 state having the switch configuration 440) to the state 540, the negative state. The negative state can be implemented by configuring the H bridge in the negative switch configuration 420 of FIG. 4B. In the negative switch configuration 420, the switches 322-2 (AN) and 322-4 (BP) are turned on, and the switches 322-1 (AP) and 322-3 (BN) are turned off. The modulation scheme 2 can be continuously generated by sequentially repeating the states 510-540, corresponding to the modulation scheme 2.

In some scenarios, one or more switches of the H bridge circuit can have an increased temperature, such as hot spot, than other switches during their operations based on the switching configurations for the modulation schemes 1 and 2. For example, modulation scheme 1 can cause the hotspot temperature on the switches 322-2 (AN) and 322-3 (BN). For instance, the switch 322-2 (AN) is turned on during states 510, 530, and 540, and the switch 322-3(BN) is turned on during states 510, 520, and 530. Thus, the temperature of the switches 322-2 (AN) and 322-3 (BN) can be higher than other switches. Also, the switches 322-2 (AN) and 322-3 (BN) may dissipate more power compared to other switches. In addition, during the modulation scheme 2, the switch 322-1 (AP) is turned on during states 510, 520, and 530, and the switch 322-4 (BP) is turned on during states 510, 530, and 540. Thus, the temperature of the switches 322-1 (AP) and 322-4 (BP) can be higher than other switches, and also the switches 322-1 (AP) and 322-4 (BP) may dissipate more power compared to other switches. These configurations for controlling the H bridge circuit can have technical limitations associated with the hotspot temperature on a certain switch or certain switches.

### Example H Bridge Switch Configurations

FIGS. 6A-6B show two examples of modulation schemes, modulation scheme 3 and modulation scheme 4. Modulation schemes 3 and 4 can be used as H bridge circuit controlling waveforms. The modulation schemes 3 and 4 can be applied to an H bridge circuit implemented in a ground pad or a vehicle pad. For example, the H bridge circuit discussed with reference to FIG. 6A-6B can be any suitable H bridge circuit in a wireless charging system (e.g., any of the H bridge circuits 202A-202D or 208A-208D of FIGS. 2A-2D). Switching configurations of the H bridge circuit are described with reference to FIGS. 4A-4D (configurations 410-440).

Compared with the modulation schemes 1 and 2 of FIGS. 5A-5B, the modulation schemes 3 and 4 of FIGS. 6A-6B can provide thermal balance (and the power dissipation balance) among the switches 322-1 - 322-4. Such thermal balance can be achieved by balancing conduction loss between the switches, where the switching current level among the switches 322-1 - 322-4 can have a different current level. For example, in FIGS. 5A-5B, each cycle (e.g., states 510-540) of the modulation scheme 1 generates hotspot temperatures on the switches 322-2 (AN) and 322-3 (BN). As another example, each cycle (e.g., states 510-540) of the modulation scheme 2 generates hotspot temperatures on the switches 322-1 (AP) and 322-4 (BP). The modulation schemes of FIGS. 6A-6B can provide thermal balance (and also balanced power dissipation) among the switches 322-1 - 322-4, for example, by balancing the on time of each switch of the H bridge circuit. Thus, the power dissipation among the switches can be balanced and significantly reduce a hotspot temperature. For example, the hotspot temperature corresponding to the modulation schemes 3 and 4 can result in more than a 10 degree Celsius temperature reduction on the hotspot relative the modulation schemes 1 and 2. In some examples, modulation schemes 3 and 4 can also provide more than a 10 degree Celsius temperature reduction on the hotspot relative to when no modulation schemes are applied.

FIG. 6A shows an example of conceptual operating waveforms applied to an H bridge circuit 202A-202D (shown in FIGS. 2A-2D) or 208A-208D (shown in FIGS. 2A- 2D). For the purpose of illustration, the waveform of the output voltage and current of the H bridge circuit implemented in the ground pad are denoted as V1 and I1, respectively. In addition, the waveform of the output voltage and current of the H bridge circuit implemented in the vehicle pad are denoted as V2 and I2, respectively.

The modulation waveforms can be generated with the modulation scheme 3 and the modulation scheme 4 described in FIG. 6B. Each modulation scheme 3 or 4 can generate the same modulation waveforms, as illustrated in FIG. 6A. In modulation scheme 4, there are different zero stages immediately following the positive state and the negative state relative to the modulation scheme 3. In some embodiments, modulation schemes 3 and 4 can be used alternately and sequentially during the charging operation of the ground pad or vehicle pad. In some embodiments, a plurality of cycles of modulation scheme 3 can be used and then a plurality of cycles of modulation scheme 4 can be subsequently used during the charging operation of the ground pad or vehicle pad.

FIG. 6B maps states of an H bridge circuit to the modulation scheme 3 and modulation scheme 4. As shown in FIG. 6B, each scheme of modulation scheme 3 and modulation scheme 4 generates a periodic waveform having four different states 610-640. As shown in FIG. 6B, the states 610, 620, 630, and 640, can be referred to as a zero, a positive, a zero, and a negative state, respectively. In some embodiments, the modulation scheme 3 and the modulation scheme 4 can be formed with various switch configurations corresponding to each state.

In modulation scheme 3, the state 610 corresponds to configuring the H bridge circuit in the zero 1 switch configuration 430 of FIG. 4C. In the zero 1 configuration 430, the switches 322-2 (AN) and 322-3 (BN) are turned on, and the switches 322-1 (AP) and 322-4 (BP) are turned off.

Then the switch 322-2 (AN) can be turned off, and the switch 322-1 (AP) can be turned on to transition from the state 610 to the state 620. The state 620 can be referred to as a positive state and implemented by configuring the H bridge circuit in the positive switch configuration 410 of FIG. 4A. In the positive switch configuration 410, the switches 322-1 (AP) and 322-3 (BN) are turned on, and the switches 322-2 (AN) and 322-4 (BP) are turned off.

Then the switch 322-3 (BN) can be turned off, and the switch 322-4 (BP) can be turned on to transition from the state 620 (the positive state) to the state 630 that corresponds to the zero 2 switch configuration 440 of FIG. 4D. In the zero 2 switch configuration 440, the switches 322-1 (AP) and 322-4 (BP) are turned on, and the switches 322-2 (AN) and 322-3 (BN) are turned off.

Then the switch 322-1 (AP) can be turned off, and the switch 322-2 (AN) can be turned on to transition from the state 630 (the zero 2 state) to the state 640, having a negative state implemented by the switch configuration 420 of FIG. 4B. In the switch configuration 420, the switches 322-2 (AN) and 322-4 (BP) are turned on, and the switches 322-1 (AP) and 322-3 (BN) are turned off. In certain applications, the modulation scheme 3 can be continuously generated by sequentially repeating the states 610-640.

As further shown in FIG. 6B, the same waveform shown in FIG. 6A can be generated by using the modulation scheme 4, for example, by controlling the switching configurations of the H bridge circuit based on the modulation scheme 4. In modulation scheme 4, the state 610 can be generated by configuring the H bridge in the zero 2 switch configuration 440 of FIG. 4D. Then the switch 322-4 (BP) can be turned off, and the switch 322-3 (BN) can be turned on to transition from the state 610 to the state 620, which can be implemented by the positive switch configuration 410 of FIG. 4A. Then the switch 322-1 (AP) can be turned off, and the switch 322-2 (AN) can be turned on to transition from the state 620 (the positive state) to a zero 1 switch configuration 430 of FIG. 4C. Then the switch 322-3 (BN) can be turned off, and the switch 322-4 (BP) can be turned on to transition from the state 630 (the zero 1 switch configuration 430) to the state 640, a negative switch configuration 420 of FIG. 4B. In certain applications, the modulation scheme 4 can be continuously generated by sequentially repeating the states 610-640. The switch control circuit 326 can control the H bridge circuit with one or more cycles of modulation scheme 3 followed by one or more cycles of modulation scheme 4.

In some embodiments, as shown in FIGS. 6A-6B, the modulation schemes 3 and 4 can balance the on time of switches 322-1 - 322-4 where the switches 322-1 - 322-4 are conducting. For example, each switch can be turned on twice during a single cycle of the modulation waveform. Thus, the temperature of each switch can be balanced without significantly increasing the hotspot temperature on a certain switch or switches.

As further illustrated in FIGS. 6A and 6B, the transition between the state 610 and 620 can occur when the current, i1, is at the current level Isw 2. In addition, the transition between the state 620 and the state 630 can occur when the current, i1, is at current level Isw 1. Furthermore, the transition between the state 630 and the state 640 can occur when the current, i1, is at the current level Isw 2. As shown in modulation scheme 3 of FIG. 6B, the switch 322-1 can be turned on at the current level Isw 2 (during the transition between states 610 and 620), the switch 322-3 can be turned on at the current level Isw 1 (during the transition between states 620 and 630), and the switch 322-2 can be turned on at the current level Isw 2 (during the transition between states 630 and 640). Since the current level Isw 1 is higher than the current level Isw 2, the power consumption at switch 322-3 (e.g., switching at the transition of states 620 and 630 by turning off the switch 322-3 and turning on the switch 322-4) can be different (e.g., higher) from other transitions (e.g., transition between states 610 and 620 and states 630 and 640). Thus, the temperature of the switches 322-3 and 322-4 can be different (e.g., higher) from the temperature of the switches 322-1 and 322-2.

As further shown in modulation scheme 4 of FIG. 6B, the switch 322-4 is turned off at the current level Isw 2 (during the transition between states 610 and 620), the switch 322-2 can be turned on and the switch 322-1 can be turned off at the current level Isw 1 (during the transition between states 620 and 630), and the switch 322-3 can be turned off at the current level Isw 2 (during the transition between states 630 and 640). Since the current level Isw 1 is higher than the current level Isw 2, the switches (e.g., the switch 322-1 and the switch 322-2) which are turned off at Isw 1 should have higher switching loss. Thus, the temperature of the switches 322-1 and 322-2 can be higher than the temperature of the switches 322-3 and 322-4. Alternating the modulation schemes 3 and 4 can further balance the temperature among the switches 322-1 - 322-4.

The present disclosure does not limit the order of applying the modulation scheme 3 or 4, and the modulation schemes 3 and 4 can be applied in any sequence order based on specific applications. In some embodiments, modulation scheme 3 can occupy between 0% and 100% of a wireless charging cycle. In other embodiments, modulation scheme 4 can occupy between 0% and 100% of a wireless charging cycle. Although FIG. 6B illustrates that states 620 and 640 are longer in duration than states 610 and 630, in other embodiments states 610 and 630 can be longer in duration than states 620 and 640.

### Example Waveforms with Alternating Modulation

As discussed above, the modulation schemes 3 and 4 (as shown in FIGS. 6A-6B) can be alternately and sequentially applied. In some embodiments, the transition between the modulation schemes 3 and 4 can begin during the positive state 620 or the negative state 640. Beginning the transition between modulation schemes during the positive state 620 or the negative state 640 can advantageously provide a smooth transition between the modulation schemes 3 and 4.

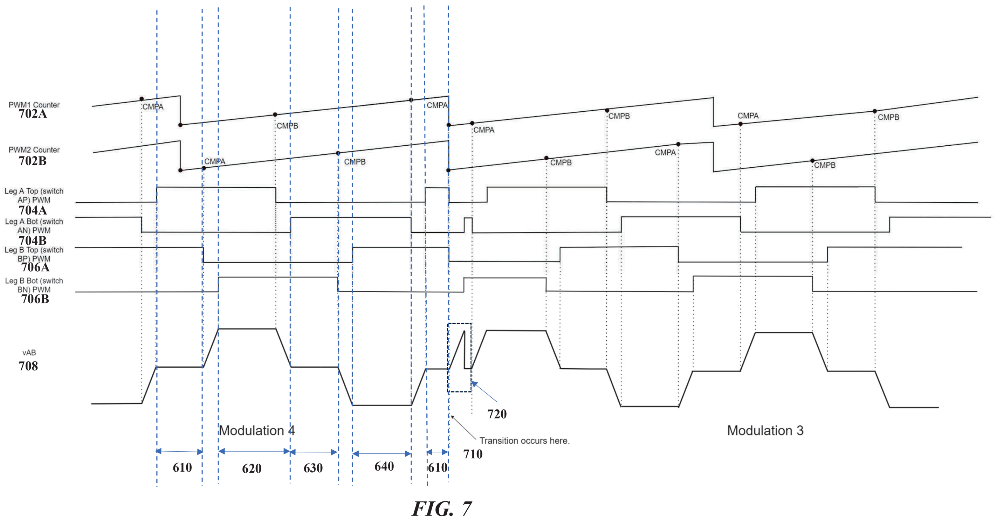

FIG. 7 shows example waveforms associated with switching a H bridge circuit with modulation schemes 3 and 4 with transition during a zero switch configuration. FIG. 7 shows pulse width modulation (PWM) counter signals 702A and 702B. As further illustrated in FIG. 7, the modulation waveforms shown in FIG. 6A can be generated by sequentially applying modulation scheme 4 and modulation scheme 3. For example, waveforms 704A, 704B, 706B, and 706A are respectively applied to the switches 322-1 (AP), 322-2 (AN), 322-3 (BN), and 322-4 (BP). Applying these waveforms to the H bridge circuit 322 can generate the modulation waveform 708 at the output of the H bridge circuit. As illustrated in the waveform 708, the switching configuration (e.g., configured by applying the waveforms 704A, 704B, 706A, and 706B to the corresponding switch of the H bridge circuit) associated with the modulation scheme 4 is first applied. For example, the switching configuration corresponding to configurations 440, 410, 430, 420, and 440 (illustrated in FIGS. 4A-4D) are sequentially applied, generating the bridge output voltage that corresponds to the states 610, 620, 630, 640, and 610 (illustrated in FIG. 6B), respectively.

As further shown in FIG. 7, the transition to the modulation scheme 3 (from the modulation scheme 4) can begin during the state 610 (e.g., zero state). When the transition occurs at a point 710, there is a relatively short period where all switches (e.g., the switches 322-1, 322-2, 322-3, and 322-4) are turned off, which can result in positive voltage transient at the bridge output. Such a transition can be non-smooth transition, and the transition can result in additional voltage applied across the resonant tank, as shown during duration 720, (e.g., resonant tank 204A-D included in the ground pad or resonant tank 206A-206D included in the vehicle pad). Such additional voltage and current can drive undesirable overvoltage or current into the resonant tank that can result in reducing lifespan of electrical components and/or damage to electrical components.

FIG. 8 illustrates waveforms associated with switching a H bridge circuit with modulation scheme 3 and 4 with a transition during a non-zero switch configuration. As shown in FIG. 8, the modulation scheme illustrated in waveform 808 can generate a smooth transition between modulation schemes 4 and 3. This smooth transition may not introduce any additional voltage and current driving into the resonant tank.

FIG. 8 shows PWM counter signals 802A and 802B. As further illustrated in FIG. 8, the modulation waveforms shown in FIG. 6A can be generated by sequentially applying modulation scheme 4 and modulation scheme 3. For example, waveforms 804A, 804B, 806B, and 806A are respectively applied to the switches 322-1 (AP), 322-2 (AN), 322-3 (BN), and 322-4 (BP). The waveforms 804A, 804B, 806B, and 806A can represent signals generated by the switch control circuit 326 for controlling the switches 322-1 (AP), 322-2 (AN), 322-3 (BN), and 322-4 (BP). Applying these waveforms to the H bridge circuit 322 can generate the modulation waveform 808 at the output of the H bridge circuit. As illustrated in the waveform 808, the switching configuration corresponding to configurations 440, 410, 430, 420, 440, and 510 (illustrated in FIGS. 4A-4D) are sequentially applied, generating the bridge output voltage that corresponds to the states 610, 620, 630, 640, 610, and 620, respectively. As further shown in FIG. 8, the transition to the modulation scheme 3 (from the modulation scheme 4) can begin during the state 620 (e.g., non-zero state). As further shown in FIG. 8, the transition to the modulation scheme 3 (from the modulation scheme 4) can occur after the zero state (e.g., 610 or 630). Thus, the positive state (e.g., during duration 820 corresponding to configuration 410 of FIGS. 5A-5C) can follow the zero state after the transition at the point 810.

In some embodiments, the smooth transition at the point 810 can be generated by delaying the application of modulation scheme 3 until completing the zero state of the modulation scheme 4. As a result of the delay, the application of the modulation scheme 3 can make the smooth transition at the point 810 by avoiding driving overvoltage and overcurrent into the resonant tank.

### Example Scenarios for Managing Switching Configuration Control Logic

As described in above, the switch control circuit 326 can control the switches of the H bridge circuit to generate the various modulation schemes 1- 4. In some embodiments, the switch control circuit 326 can configure the H bridge circuit into one or more sequences of switch configurations based on the modulation scheme by utilizing various control logic. For example, a processor or any other suitable circuitry can implement the switch control circuit 326 to process various inputs and/or data to determine transitions between modulation schemes (e.g., a transition between the modulation scheme 3 and the modulation scheme 4), the frequency of the transitions during wireless charging, and how to enable a smooth transition, such as the transition shown in FIG. 8. In some examples, the switch control circuit 326 may control the switches based on monitoring results of one or more operating parameters of the ground and/or vehicle pad, such as operating temperature, power level, or the like.

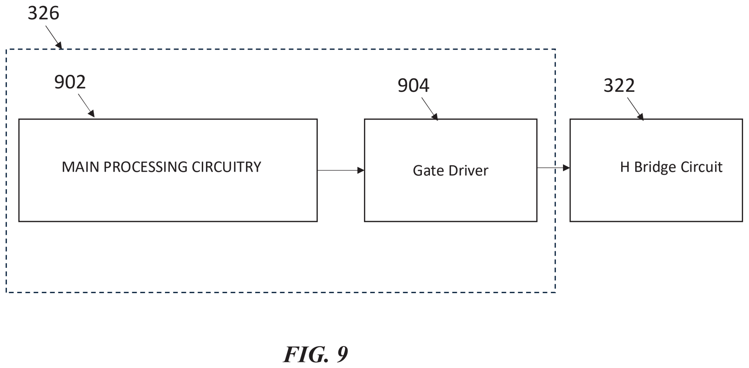

FIG. 9 illustrates an example embodiment of the switch control circuit 326 connected with the H bridge circuit 322. In some embodiments, the switch control circuit 326 can be implemented in the ground pad and control switches of the H bridge circuit 322 to implement switch configurations for one or more modulation schemes, such as one or more of modulation schemes 1-4. In some embodiments, the switch control circuit 326 can be implemented in the vehicle pad and control the switches of the H bridge circuit 322 by alternating between modulation scheme 3 and modulation scheme 4.

As illustrated in FIG. 9, the switch control circuit 326 can include main processing circuitry 902 and a gate driver 904. The main processing circuitry 902 can include a processor and memory to process various inputs and/or data to determine to transition between modulation schemes (e.g., transition between the modulation scheme 3 and the modulation scheme 4), the frequency of the transitions during wireless charging, how to enable a smooth transition, such as the transition shown in FIG. 8, the like, or any suitable combination thereof. Any suitable processor and memory can be included in the main processing circuitry 902. The gate driver 904 can be configured to drive one or more input signals to control the switches. In some examples, the gate driver 904 can include various components to generate input power used for controlling each switch, and the components can include, without limitation, an amplifier, for example.

In some operations of the switch control circuit 326, the switch control circuit 326 can determine whether to switch/transition between modulation schemes 1 and 2, modulation schemes 3 and 4, or modulation schemes 1, 2, 3, and 4. The switch control circuit 326 can determine how frequently to switch among these modulation patterns. The switch control circuit 326 can determine to transition between modulation schemes based on the unbalanced temperature and its impacts. The unbalanced temperature can be derived from one or more operating points, including battery voltage levels, ground pad DC voltage levels, coupling coefficients, power levels, the tank currents of the ground pad and the vehicle pad, the inductance estimations of the ground pad and the vehicle pad, etc., and/or temperature from temperature sensors of components.

The main processing circuitry 902 can be referred to as a controller. In some embodiments, the main processing circuitry 902 can be configured to perform various logic, such as logic for one or more of determining whether to perform transitions, frequency (e.g., number of transitions) of the transitions, or determining a mechanism (e.g., delaying the transition to occur at non-zero state) for enabling a smooth transition. For example, the controller can determine whether to switch/transition between modulation schemes 1-2 or 3-4 or 1, 2, 3, and 4 (e.g., the modulation schemes shown in FIGS. 5A-5B and 6A and 6B) and how frequently to switch among these modulation schemes. The determination can be based on the unbalanced temperature and its impacts, which can be derived from the operating points, including one or more of battery voltage levels, wall box voltage levels, coupling coefficients, power levels, the tank currents of the ground pad and the vehicle pad, the inductance estimations of the ground pad and/or the vehicle pad, etc., or temperature from temperature sensors of components.

In various embodiments, as disclosed herein, the switch control circuit 326 can be configured to manage the switching configuration to generate a smooth transition during the transition of the modulation scheme 4 and modulation scheme 3. FIG. 8 illustrates modulation waveform 808 with a smooth transition between the modulation scheme 4 and modulation scheme 3. For example, the switch control circuit 326 can be configured to switch (e.g., transitioning) the modulation scheme 4 to the modulation scheme 3 after the zero state (e.g., 610 or 630). Thus, the positive state (corresponding to configuration 410 of FIGS. 5A-5C) can follow the zero state after the point 810 (e.g., transition point). In some embodiments, the switch control circuit 326 can delay the application of modulation scheme 3 until the zero state of the modulation scheme 4 is completed. As a result of the delay, the application of the modulation scheme 3 can make the smooth transition at the point 810 by avoiding driving overvoltage and overcurrent into the resonant tank.

The foregoing disclosure is not intended to limit the present disclosure to the precise forms or particular fields of use disclosed. As such, it is contemplated that various alternate embodiments and/or modifications to the present disclosure, whether explicitly described or implied herein, are possible in light of the disclosure. Having thus described embodiments of the present disclosure, a person of ordinary skill in the art will recognize that changes may be made in form and detail without departing from the scope of the present disclosure. Thus, the present disclosure is limited only by the claims.

It is to be understood that not necessarily all objects or advantages may be achieved in accordance with any particular example described herein. Thus, for example, those skilled in the art will recognize that some examples may be operated in a manner that achieves or optimizes one advantage or group of advantages as taught herein without necessarily achieving other objects or advantages as may be taught or suggested herein.

All of the processes described herein may be embodied in, and fully automated via, software code modules executed by a computing system that includes computers or processors. The code modules may be stored in any type of non-transitory computer-readable medium or other computer storage device. Some or all the methods may be embodied in specialized computer hardware.

Many other variations than those described herein will be apparent from this disclosure. For example, depending on the example, some acts, events, or functions of any of the algorithms described herein can be performed in a different sequence, can be added, merged, or left out altogether (for example, not all described acts or events are necessary for the practice of the algorithms). Moreover, in some examples, acts or events can be performed concurrently, for example, through multi-threaded processing, interrupt processing, or multiple processors or processor cores, or on other parallel architectures, rather than sequentially. In addition, different tasks or processes can be performed by different machines and/or computing systems that can function together.

The various illustrative logical blocks and modules described in connection with the examples disclosed herein can be implemented or performed by a machine, such as a processing unit or processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A processor can be a microprocessor, but in the alternative, the processor can be a controller, microcontroller, or state machine, combination of the same, or the like. A processor can include electrical circuitry to process computer-executable instructions. In some examples, a processor includes an FPGA or other programmable device that performs logic operations without processing computer-executable instructions. A processor can also be implemented as a combination of computing devices, for example, a combination of a DSP and a microprocessor, a plurality of microprocessors, microprocessors in conjunction with a DSP core, or any other such configuration. Although described herein primarily with respect to digital technology, a processor may also include primarily analog components. A computing environment can include any type of computer system, including, but not limited to, a computer system based on a microprocessor, a mainframe computer, a digital signal processor, a portable computing device, a device controller, or a computational engine within an appliance, to name a few.

The elements of a method, process, routine, or algorithm described in connection with the embodiments disclosed herein can be embodied directly in hardware, in a software module executed by a processor device, or in a combination of the two. A software module can reside in RAM memory, flash memory, ROM memory, EPROM memory, EEPROM memory, registers, hard disk, a removable disk, a CD-ROM, or any other form of a non-transitory computer-readable storage medium. An exemplary storage medium can be coupled to the processor device such that the processor device can read information from, and write information to, the storage medium. In the alternative, the storage medium can be integral to the processor device. The processor device and the storage medium can reside in an ASIC. The ASIC can reside in a user terminal. In the alternative, the processor device and the storage medium can reside as discrete components in a user terminal.

The processes described herein or illustrated in the figures of the present disclosure may begin in response to an event, such as on a predetermined or dynamically determined schedule, on demand when initiated by a user or system administrator, or in response to some other event. When such processes are initiated, a set of executable program instructions stored on one or more non-transitory computer-readable media (e.g., hard drive, flash memory, removable media, etc.) may be loaded into memory (e.g., RAM) of a server or other computing device. The executable instructions may then be executed by a hardware-based computer processor of the computing device. In some embodiments, such processes or portions thereof may be implemented on multiple computing devices and/or multiple processors, serially or in parallel.

Conditional language such as, among others, "can," "could," "might" or "may," unless specifically stated otherwise, are otherwise understood within the context as used in general to convey that some examples include, while other examples do not include, some features, elements, and/or steps. Thus, such conditional language is not generally intended to imply that features, elements, and/or steps are in any way for examples or that examples necessarily include logic for deciding, with or without user input or prompting, whether these features, elements and/or steps are included or are to be performed in any particular example.

Disjunctive language such as the phrase "at least one of X, Y, or Z," unless specifically stated otherwise, is otherwise understood with the context as used in general to present that an item, term, etc., may be either X, Y, or Z, or any combination thereof (for example, X, Y, and/or Z). Thus, such disjunctive language is not generally intended to, and should not, imply that some examples require at least one of X, at least one of Y, or at least one of Z to each be present.

Any process descriptions, elements or blocks in the flow diagrams described herein and/or depicted in the attached figures should be understood as potentially representing modules, segments, or portions of code which include executable instructions for implementing specific logical functions or elements in the process. Alternate examples are included within the scope of the examples described herein in which elements or functions may be deleted, executed out of order from that shown, or discussed, including substantially concurrently or in reverse order, depending on the functionality involved as would be understood by those skilled in the art.

It should be emphasized that many variations and modifications may be made to the above-described examples, the elements of which are to be understood as being among other acceptable examples. All such modifications and variations are intended to be included herein within the scope of this disclosure.

Any process descriptions, elements or blocks in the flow diagrams described herein and/or depicted in the attached figures should be understood as potentially representing modules, segments, or portions of code which include executable instructions for implementing specific logical functions or elements in the process. Alternate implementations are included within the scope of the examples described herein in which elements or functions may be deleted, executed out of order from that shown, or discussed, including substantially concurrently or in reverse order, depending on the functionality involved as would be understood by those skilled in the art.

Unless otherwise explicitly stated, articles such as "a" or "an" should generally be interpreted to include one or more described items. Accordingly, phrases such as "a device configured to" are intended to include one or more recited devices. Such one or more recited devices can also be collectively configured to carry out the stated recitations. For example, "a processor configured to carry out recitations A, B, and C" can include a first processor configured to carry out recitation A working in conjunction with a second processor configured to carry out recitations B and C.

## Claims

1. A method of wireless power transfer, the method comprising:
controlling an H bridge circuit of a ground pad with a first modulation that configures the H bridge, the first modulation comprising two non-zero switch configurations and two different zero switch configurations, the two non-zero switch configurations comprising a positive switch configuration and a negative switch configuration;
transitioning control of the H bridge circuit from the first modulation to a second modulation, the second modulation comprising the two non-zero switch configurations and the two different zero switch configurations in a different sequence than the first modulation; and
causing wireless power transfer from the ground pad to a vehicle pad of a vehicle using the H bridge circuit.

2. The method of Claim 1, wherein the transitioning control of the H bridge circuit from the first modulation to the second modulation occurs in time during one of the two non-zero switch configurations.

3. The method of Claim 1 or 2, wherein the first modulation controls the H bridge circuit in a sequence where each transition between switching configurations associated with the sequence involves one switch turning on and one switch turning off.

4. The method of one of the preceding claims, wherein the first modulation and the second modulation both correspond to providing a same output voltage waveform from the H bridge circuit.

5. The method of one of the preceding claims, wherein the first modulation comprises operating the H bridge circuit in the two non-zero switch configurations for a longer duration of time or a shorter duration of time than in the two different zero switch configurations.

6. The method of one of the preceding claims, wherein the first modulation controls the H bridge circuit in a first sequence where the positive switch configuration follows a first of the two different zero switch configurations, and wherein the second modulation controls the H bridge circuit in a second sequence where the positive switch configuration follows a second of the two different zero switch configurations, and/ or wherein the first modulation controls the H bridge circuit in a first sequence where a second of the two different zero switch configurations follows the positive switch configuration, and wherein the second modulation controls the H bridge circuit in a second sequence where a first of the two different zero switch configurations follows the positive switch configuration.

7. The method of one of the preceding claims, wherein the H bridge circuit is controlled by the first modulation during at least 50% of a wireless charging cycle.

8. The method of one of the preceding claims, further comprising transitioning control of the H bridge circuit from the second modulation to a third modulation, the third modulation comprising the two non-zero switch configurations and only a first of the two different zero switch configurations, preferably further comprising transitioning control of the H bridge circuit from the second modulation to a fourth modulation, the fourth modulation comprising the two non-zero switch configurations and only a second of the two different zero switch configurations.

9. The method of one of the preceding claims, further comprising determining, based at least in part on a temperature associated with the H bridge circuit, that the H bridge circuit is to transition from the first modulation to the second modulation, wherein the transitioning control of the H bridge circuit from the first modulation to the second modulation is performed in response to the determining, preferably further comprising determining, based at least in part on the temperature associated with the H bridge circuit, a frequency of the transitioning control of the H bridge circuit from the first modulation to the second modulation.

10. A method of wireless power transfer, the method comprising:
controlling a switching circuit of a wireless charging pad with a first modulation that configures the switching circuit, the first modulation comprising two non-zero switch configurations and two different zero switch configurations, the two non-zero switch configurations comprising a positive switch configuration and a negative switch configuration; and
transitioning control of the switching circuit from the first modulation to a second modulation, the second modulation comprising the two non-zero switch configurations and the two different zero switch configurations in a different sequence than the first modulation;
wherein the switching circuit receives a voltage associated with wirelessly receiving power from another wireless charging pad.

11. The method of Claim 10, wherein the transitioning control of the switching circuit from the first modulation to the second modulation occurs in time during one of the two non-zero switch configurations.

12. A wireless charging pad comprising:
an H bridge circuit;
a resonant tank electrically connected to the H bridge circuit, the resonant tank comprising a coil arranged for wireless power transfer; and
a switch control circuit configured to control the H bridge circuit using both a first modulation and a second modulation,
wherein the first modulation comprises two non-zero switch configurations and two different zero switch configurations, and wherein the second modulation comprises the two non-zero switch configurations and the two different zero switch configurations in a different sequence than the first modulation.

13. The wireless charging pad of Claim 12, wherein the wireless charging pad is a ground pad, and/or wherein the wireless charging pad is a vehicle pad.

14. The wireless charging pad of Claim 12 or 13, wherein the wireless charging pad is configured for wireless power transfer associated with charging a battery pack of a vehicle, and wherein the battery pack has an operating voltage in a range from 200 Volts to 800 Volts.

15. The wireless charging pad of Claim 12, 13 or 14, wherein controlling the H bridge circuit comprises transitioning control of the H bridge circuit from the first modulation to the second modulation, preferably wherein the transitioning control of the H bridge circuit from the first modulation to the second modulation occurs in time during one of the two non-zero switch configurations.
